# EUROPÄISCHE PATENTANMELDUNG

(11) **EP 1 316 689 A2**
(43) Veröffentlichungstag der Anmeldung: **04.06.2003**
(21) Anmeldenummer: 02024083.4
(22) Anmeldetag: 29.10.2002
(51) Int. Cl.: F01N 3/20

(54) **Reduktionsmitteldosiereinrichtung**

(30) Priorität: 03.12.2001 DE 20119513 U
(71) Anmelder: PUReM Abgassysteme GmbH & Co. KG, 58706 Menden (DE)
(72) Erfinder: Hüthwohl, Georg, Dr.-Ing., 59494 Soest (DE)
(74) Vertreter: Schröter & Haverkamp

(57) **Zusammenfassung**

Eine Reduktionsmitteldosiereinrichtung zum Zuführen eines Reduktionsmittels in den Abgasstrang 8 der Brennkraftmaschine 2 eines Kraftfahrzeuges, wobei die Brennkraftmaschine 2 durch in einem Kraftstofftank 4 mitgeführten Kraftstoff betreibbar und zwischen der Brennkraftmaschine 2 und dem Kraftstofftank 4 eine Kraftstoffrücklaufleitung 12 angeordnet ist, welche Reduktionsmitteldosiereinrichtung 1 einen Reduktionsmitteltank 3 und eine den Reduktionsmitteltank 3 mit dem Abgasstrang 8 der Brennkraftmaschine 2 verbindende Versorgungsleitung 5 umfaßt, ist dadurch bestimmt, daß die Versorgungsleitung 5 zu ihrer Beheizung in wärmeleitender Verbindung mit der Kraftstoffrücklaufleitung 12 der Brennkraftmaschine 2 stehend angeordnet ist.

## Beschreibung

Die Erfindung betrifft eine Reduktionsmitteldosiereinrichtung zum Zuführen eines Reduktionsmittels in den Abgasstrang der Brennkraftmaschine eines Kraftfahrzeuges, wobei die Brennkraftmaschine durch in einem Kraftstofftank mitgeführten Kraftstoff betreibbar und zwischen der Brennkraftmaschine und dem Kraftstofftank eine Kraftstoffrücklaufleitung angeordnet ist, welche Reduktionsmitteldosiereinrichtung, einen Reduktionsmitteltank und eine den Reduktionsmitteltank mit dem Abgasstrang der Brennkraftmaschine verbindende Versorgungsleitung umfaßt.

Neben Kohlenmonoxid (CO) und Kohlenwasserstoffen (HC) gehören insbesondere die Stickoxide (NOₓ) zu den umweltgefährdenden, direkt emittierten Primärschadstoffen, die beim Betrieb von Verbrennungsmotoren, insbesondere Dieselmotoren entstehen. Ein Einsatz von Dreiwegekatalysatoren, wie sie bei Ottomotoren und Gasmotoren verwendet werden, sind aufgrund eines Sauerstoffüberschusses im dieselmotorischen Abgas nicht einsetzbar. Aus diesem Grunde wurden zur Reduktion der Stickoxidemission bei Dieselmotoren selektiv arbeitende SCR-Katalysatoren (Selektive Catalytic Reduction-Katalysator) entwickelt, in dem mit einem zugeführten Reduktionsmittel die ausgestoßenen Stickoxide zu N₂ und H₂O reduziert werden. Als Reduktionsmittel wird Ammoniak eingesetzt. Das zur Durchführung der Reduktion der Stickoxide benötigte Ammoniak kann in unterschiedlicher Form an Bord des Kraftfahrzeuges mitgeführt werden. Mitgeführt werden kann reines Ammoniak in gasförmiger oder auch in flüssiger Phase. Zur Vermeidung von Handhabungsproblemen des reinen Ammoniaks wird dieses bevorzugt in gebundener Form fahrzeugseitig bevorratet, beispielsweise in einem Tank, wobei das in gebundener Form mitgeführte Ammoniak entweder im Abgasstrang oder zuvor zur Freigabe des gebundenen Ammoniak hydrolytisch aufgespalten wird. Als derartiges Reduktionsmittel wird beispielsweise Harnstoff als wässrige Lösung eingesetzt. Die Harnstofflösung ist in einem Reduktionsmitteltank bevorratet und über eine Versorgungsleitung mit dem Abgasstrang der Brennkraftmaschine verbunden. Ein am Abgasstrang positioniertes Dosierventil dient zum Zuführen der jeweils benötigten Harnstoffmenge, die infolge der im Abgastrang herrschenden Temperaturen sofort vergast, so daß das zum Durchführen der Stickoxidreduktion benötigte Ammoniak freigesetzt ist. Durch die Anordnung des Dosierventils unmittelbar am Abgasstrang muß dieses gekühlt werden, damit sich die eingangsseitig am Dosierventil anstehende flüssige Harnstofflösung infolge der hohen Temperaturen nicht zersetzt oder der Harnstoff auskristallisiert. Eine solche Reduktionsmitteldosiereinrichtung ist beispielsweise aus DE 198 56 366 C1 bekannt. Entsprechend einer weiteren vorbekannten Ausgestaltung ist das Dosierventil unmittelbar unter dem Reduktionsmitteltank angeordnet, wobei dieses mit dem Abgasstrang über eine sich im Allgemeinen über mehrere Meter erstreckende Zuführleitung verbunden ist. Die Zuführleitung ist Druckluft beaufschlagt, wobei für den Transport der zuzuführenden Harnstofflösungsmenge die von dem Luftverdichter für die Bremsanlage bereitgestellte Druckluft eingesetzt ist. Transportiert wird somit die dosierte Harnstofflösungsmenge in der Versorgungsleitung als Aerosol.

Die Verwendung einer wässrigen Harnstofflösung als Reduktionsmittel wird in mehrerlei Hinsicht als zum Einsatz in einem Kraftfahrzeug und zum anschließenden Freisetzen des darin enthaltenen Ammoniaks als Reduktionsmittel angesehen. Nachteilig ist jedoch bei einer Verwendung einer wässrigen Harnstofflösung als Reduktionsmittel, daß ein Betrieb der Reduktionsmitteldosiereinrichtungen nur bei solchen Temperaturen bestimmungsgemäß erfolgen kann, die oberhalb des Gefrierpunktes der Harnstofflösung liegen. Daher ist ein Einsatz einer solchen wässrigen Harnstofflösung als Reduktionsmittel zum Betreiben einer Reduktionsmitteldosiereinrichtung nur mit zusätzlichen Heizeinrichtungen möglich. Aus diesem Grunde ist es notwendig, unter anderem auch die Versorgungsleitung soweit zu beheizen, daß ein Transport des darin geführten Reduktionsmittels, transportiert als Flüssigkeit oder als Aerosol, auch bei Temperaturen unterhalb des Gefrierpunktes der wässrigen Harnstofflösung gewährleistet ist. Als Heizungen eingesetzt sind üblicherweise Widerstandsheizungen. Andere Wärmelieferanten, wie beispielsweise das bei einem Betrieb der Brennkraftmaschine warme Kühlwasser können nur mit einem erheblichen Aufwand zum Beheizen sich zwischen dem Reduktionsmitteltank und dem Abgasstrang erstreckenden Versorgungsleitung eingesetzt werden. Aber auch der Einsatz von Widerstandsheizungen ist mit Aufwand verbunden, da sichergestellt sein muß, daß ein Überhitzen vermieden ist.

Ausgehend von diesem diskutierten Stand der Technik liegt der Erfindung daher die Aufgabe zugrunde, eine eingangs genannte, gattungsgemäße Reduktionsmitteldosiereinrichtung dergestalt auszubilden, daß bei einem Betrieb der Einrichtung die Versorgungsleitung, zumindest deren relevante Abschnitte auf eine Temperatur erwärmbar ist, ohne die zum Stand der Technik aufgezeigten Nachteile hinnehmen zu müssen.

Diese Aufgabe wird erfindungsgemäß dadurch gelöst, daß die Versorgungsleitung zu ihrer Beheizung in wärmeleitender Verbindung mit der Kraftstoffrücklaufleitung der Brennkraftmaschine stehend angeordnet ist.

Bei der erfindungsgemäßen Reduktionsmitteldosiereinrichtung ist die Versorgungsleitung zum Transportieren des Reduktionsmittels von einem Reduktionsmitteltank zum Abgasstrang in wärmeleitender Verbindung zu der Kraftstoffrücklaufleitung angeordnet, so daß die in der Kraftstoffrücklaufleitung enthaltene Wärme, die bei einem Betrieb der Brennkraftmaschine in aller Regel 60 - 70° C nicht überschreitet, zum Erwärmen der Versorgungsleitung, zumindest der maßgeblichen Abschnitte genutzt werden kann. Besonders vorteilhaft ist, daß in aller Regel der Kraftstofftank, in den die Kraftstoffrücklaufleitung von der Brennkraftmaschine kommend mündet, und der Reduktionsmittelbehälter benachbart zueinander angeordnet sind. Daher ist zweckmäßigerweise der Verlauf der Versorgungsleitung parallel zur Kraftstoffrücklaufleitung angeordnet, wobei beide Leitungen beispielsweise in einem Doppelrohr - als doppelwandiges Rohr mit zwei konzentrisch zueinander angeordneten Kanälen oder auch als parallel zueinander verlaufende Kanäle ausgebildet - vereint sein können. Somit ist der Aufwand zum ausreichenden Erwärmen der Versorgungsleitung auf ein Minimum reduziert. Insbesondere bedarf es keiner zusätzlichen Regelung der Wärme, da die Zersetzungstemperatur des in wässriger Form gegebenenfalls in der Versorgungsleitung transportierten Harnstoffes in keinem Zeitpunkt überschritten ist. Vorteilhaft ist ferner, daß auf diese Weise zudem eine Kühlung des in der Kraftstoffrücklaufleitung zurücktransportierten Kraftstoffes erfolgt, so daß weitere, ggf. vorzunehmende Kühlmaßnahmen zum Kühlen des rücklaufenden Kraftstoffes grundsätzlich nicht notwendig sind. Die benötigte Wärme in der Kraftstoffrücklaufleitung steht bereits nach kürzester Betriebszeit der Brennkraftmaschine zur Verfügung, insbesondere wesentlich früher als ein ggf. durch den Betrieb der Brennkraftmaschine zu erwärmendes Kühlwasser.

Da die Kraftstoffrücklaufleitung sich vom Kraftstofftank bis zur Brennkraftmaschine hin erstreckt, ist es ohne weiteres möglich, im Wesentlichen die gesamte Versorgungsleitung zwischen dem Reduktionsmitteltank und dem Dosierventil, für den Fall, daß dieses im Bereich des Abgasstranges oder der Brennkraftmaschine angeordnet ist, zum Abgeben der gewünschten Harnstoffmenge zu beheizen.

Das Dosierventil befindet sich in einer bevorzugten Ausgestaltung der Reduktionsmitteldosiereinrichtung unmittelbar der Brennkraftmaschine zugeordnet. Eingangsseitig liegt an dem Dosierventil flüssige, wässrige Harnstofflösung an. Das Dosierventil selbst mündet in eine Zufuhrleitung, die Druckluft beaufschlagt ist. Zweckmäßigerweise ist die Zuführleitung Druckluft beaufschlagt durch die Ladeluft der Aufladegruppe der Brennkraftmaschine (z. B. Turbolader oder Kompressor). Zum einen hat dies zum Vorteil, daß das Dosierventil unmittelbar in der Nähe der Brennkraftmaschine angeordnet ist und somit auch durch diese erwärmt wird, zum anderen ist das Dosierventil nicht unmittelbar am Abgasstrang positioniert, so daß dieses gekühlt werden müßte. Der Einsatz von Ladeluft als Druckluft als Transportmedium zum Transportieren der dosierten Harnstoffmenge als Aerosol hat zum Vorteil, daß die für den Transport des vom Dosierventil abgegebenen Reduktionsmittels benötigte Luftmenge im Verhältnis zu der von dem Turbolader bereitgestellten Luftmenge nur sehr klein ist und diese Luftabzweigung daher ohne weitere Auswirkungen auf den bestimmungsgemäßen Betrieb des Turboladers ist. Insbesondere kann bei Einsatz von Ladeluft in der beschriebenen Art und Weise diese vor oder hinter dem Ladeluftkühler entnommen werden, so daß Luft unterschiedlicher Temperatur zur Mischung bereit steht.

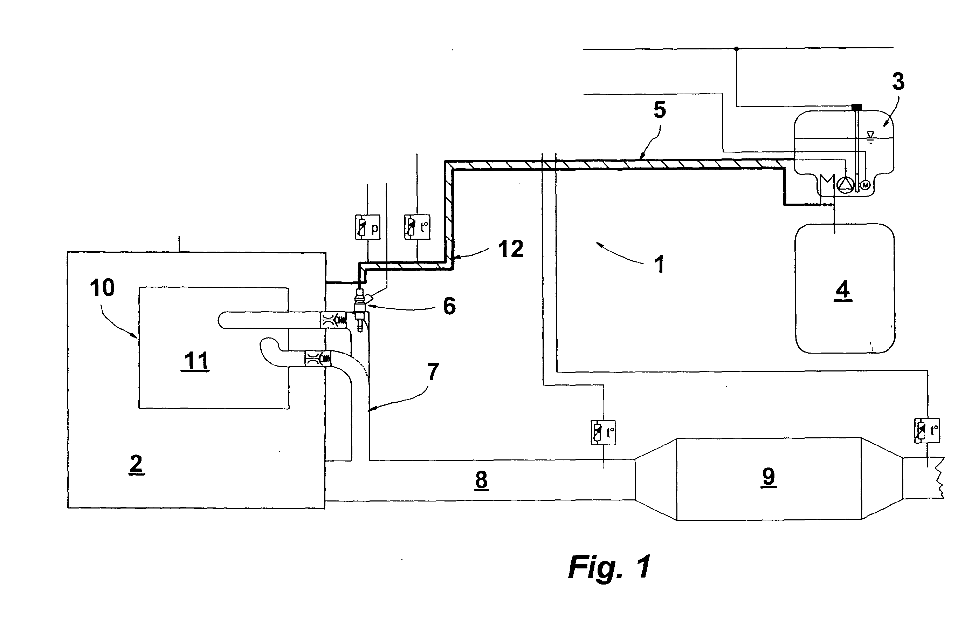

Die Erfindung ist nachfolgend anhand eines Ausführungsbeispieles unter Bezugnahme auf die beigefügte **Figur 1** beschrieben. Figur 1 zeigt nach Art eines Blockdiagrammes eine insgesamt mit dem Bezugszeichen 1 gekennzeichnete Reduktionsmitteldosiereinrichtung zum Zuführen von Harnstoff in den Abgasstrang eines Dieselmotors 2. Die Reduktionsmitteldosiereinrichtung 1 umfaßt einen Reduktionsmitteltank 3, der benachbart zum Kraftstofftank 4, in dem der zum Betreiben der Brennkraftmaschine 2 befindliche Kraftstoff bevorratet ist. Der Reduktionsmitteltank 3 ist über eine Versorgungsleitung 5 mit einem Dosierventil 6 verbunden. Das Dosierventil 6 ist der Brennkraftmaschine 2, bei der es sich in dem dargestellten Ausführungsbeispiel um einen Dieselmotor handelt, zugeordnet. Ausgangsseitig greift das Dosierventil 6 in eine Druckluft beaufschlagte Zuführleitung 7 ein, die in den Abgasstrang 8 der Brennkraftmaschine 2 mündet. Die Mündung der Zuführleitung 7 in den Abgasstrang 8 befindet sich vor einem SCR-Katalysator 9. Bei dem dargestellten Ausführungsbeispiel ist die Zuführleitung 7 durch die Ladeluft eines der Brennkraftmaschine 2 zugeordneten Turboladers 10 beaufschlagt. Die von dem Dosierventil 6 abgegebene Reduktionsmittelmenge wird daher in der Zuführleitung 7 als Aerosol transportiert. Die der Zuführleitung 7 zuzuführende Druckluft kann - wie in Figur 1 dargestellt - vor und/oder hinter dem Ladeluftkühler 11 entnommen werden, so daß das in der Zuführleitung 7 transportierte Reduktionsmittel als Aerosol entsprechend temperiert ist, bevor dieses in den Abgasstrang 8 eintritt.

Das Dosierventil 6 ist über ein nicht näher dargestelltes Motormanagementsystem angesteuert, damit entsprechend der jeweiligen Motorensituation die benötige Reduktionsmittelmenge abgegeben werden kann.

Zwischen der Brennkraftmaschine 2 und dem Kraftstofftank 4 ist eine Kraftstoff rücklaufleitung 12 angeordnet. Der in der Kraftstoffrücklaufleitung 12 von der Brennkraftmaschine 2 zu dem Kraftstofftank 4 zurücktransportierte Kraftstoff weist bereits nach kürzester Betriebszeit der Brennkraftmaschine eine Temperatur zwischen 50 und 70 °C auf. In wärmeleitender Verbindung mit der Kraftstoffrücklaufleitung 12 ist die Versorgungsleitung 5 zum Zuführen des Reduktionsmittels von dem Reduktionsmitteltank 3 zum Dosierventil 6 angeordnet. Der Abschnitt der Versorgungsleitung 5, der in wärmeleitender Verbindung mit der Kraftstoffrücklaufleitung 12 steht, ist in der Figur schraffiert dargestellt. Aus der Darstellung wird deutlich, daß im Wesentlichen die gesamte Versorgungsleitung 5 in wärmeleitender Verbindung mit der Kraftstoffrücklaufleitung 12 steht. Die wärmeleitende Verbindung zwischen den beiden Leitungen 5, 12 kann beispielsweise durch ein Doppelrohr mit zwei parallel zueinander verlaufenden Kanälen ausgebildet sein. Die beiden Leitungen sind beispielsweise durch einen Steg miteinander verbunden oder können auch durch eine Fügeverbindung miteinander verbundene einzelne Leitungen realisiert sein.

Der Vorteil des Erwärmens der Versorgungsleitung 5 durch die Wärme des in der Kraftstoffrücklaufleitung 12 transportierten Kraftstoffes liegt nicht nur darin begründet, daß durch diesen Kraftstoff eine Wärmequelle bereitgestellt ist, die die Zersetzungstemperatur der als Reduktionsmittel eingesetzten wässrigen Harnstofflösung nicht überschreitet. Überdies ist durch die Konzeption der Kraftstoffrücklaufleitung 12 und deren Verlauf im Kraftfahrzeug bereits ein geeigneter Leitungsverlauf ebenfalls für die Versorgungsleitung 5 vorgegeben, so daß für den Verlauf der Versorgungsleitung kein neuer Leitungsverlauf konzipiert zu werden braucht.

Mit der beschriebenen Reduktionsmitteldosiereinrichtung ist ein bestimmungsgemäßer Betrieb derselben auch bei Einsatz einer wässrigen Harnstofflösung als Reduktionsmittel bei tiefen Temperaturen möglich, insbesondere bei Temperaturen unterhalb des Gefrierpunktes der wässrigen Harnstofflösung, ohne daß zum Beheizen der sich zwischen dem Reduktionsmitteltank 3 und dem Dosierventil 6 erstreckenden Versorgungsleitung 5 ein übermäßiger Aufwand betrieben werden muß. Das Beheizen der beschriebenen Versorgungsleitung ist ebenfalls bei solchen Reduktionsmitteldosiereinrichtungen in der beschriebenen Art möglich, bei denen sich das Dosierventil unmittelbar im Bereich des Reduktionsmitteltankes oder in diesen integriert befindet. Das Erwärmen der Versorgungsleitung 5 ist auch in diesen Fällen notwendig, um den Transport des dann in der Versorgungsleitung transportierten Aerosols zu gewährleisten.

Bei dem im Rahmen dieser Ausführungen benutzten Begriff Reduktionsmittel sind solche zu verstehen, die entweder das Reduktionsmittel selbst sind oder dieses als Bestandteil enthalten. Dies ist beispielsweise bei Einsatz einer wässrigen Harnstofflösung der Fall, bei der der Ammoniakbestandteil das eigentliche Reduktionsmittel darstellt.

### Bezugszeichenliste

- 1: Reduktionsmitteldosiereinrichtung
- 2: Brennkraftmaschine
- 3: Reduktionsmitteltank
- 4: Kraftstofftank
- 5: Versorgungsleitung
- 6: Dosierventil
- 7: Zuführleitung
- 8: Abgasstrang
- 9: SCR-Katalysator
- 10: Turbolader
- 11: Ladeluftkühler
- 12: Kraftstoffrücklaufleitung

## Patentansprüche

1. Reduktionsmitteldosiereinrichtung zum Zuführen eines Reduktionsmittels in den Abgasstrang (8) der Brennkraftmaschine (2) eines Kraftfahrzeuges, wobei die Brennkraftmaschine (2) durch in einem Kraftstofftank (4) mitgeführten Kraftstoff betreibbar und zwischen der Brennkraftmaschine (2) und dem Kraftstofftank (4) eine Kraftstoffrücklaufleitung (12) angeordnet ist, welche Reduktionsmitteldosiereinrichtung (1) einen Reduktionsmitteltank (3) und eine den Reduktionsmitteltank (3) mit dem Abgasstrang (8) der Brennkraftmaschine (2) verbindende Versorgungsleitung (5) umfaßt, **dadurch gekennzeichnet, daß** die Versorgungsleitung (5) zu ihrer Beheizung in wärmeleitender Verbindung mit der Kraftstoffrücklaufleitung (12) der Brennkraftmaschine (2) stehend angeordnet ist.

2. Reduktionsmitteldosiereinrichtung nach Anspruch 1, **dadurch gekennzeichnet, daß** der Reduktionsmitteltank (3) und der Kraftstofftank (4) benachbart zueinander angeordnet sind und die Versorgungsleitung (5) im Wesentlichen über ihre gesamte Länge in wärmeleitender Verbindung mit der Kraftstoff rücklaufleitung (12) steht.

3. Reduktionsmitteldosiereinrichtung nach Anspruch 1 oder 2, **dadurch gekennzeichnet, daß** die Versorgungsleitung (5) an ein der Brennkraftmaschine (2) zugeordnetes Dosierventil (6) angeschlossen ist.

4. Reduktionsmitteldosiereinrichtung nach Anspruch 3, **dadurch gekennzeichnet, daß** das Dosierventil (6) ausgangsseitig über eine das Dosierventil (6) mit dem Abgasstrang (8) verbindende Druckluft beaufschlagte Zuführleitung (7) verbunden ist.

5. Reduktionsmitteldosiereinrichtung nach Anspruch 4, **dadurch gekennzeichnet, daß** die Zuführleitung ( 7) eingangsseitig durch die Ladeluft einer Aufladegruppe der Brennkraftmaschine (10) beaufschlagt ist.

6. Reduktionsmitteldosiereinrichtung nach einem der Ansprüche 1 - 5, **dadurch gekennzeichnet, daß** als Reduktionsmittel eine wässrige Harnstofflösung vorgesehen ist.
